# EUROPÄISCHE PATENTSCHRIFT

(11) **EP 1 145 805 B1**
(45) Veröffentlichungstag und Bekanntmachung des Hinweises auf die Patenterteilung: **30.03.2011**
(21) Anmeldenummer: 01108253.4
(22) Anmeldetag: 31.03.2001
(51) Int. Cl.: B25J 15/00

(54) **Verfahren und Vorrichtung zum selbstständigen Be- und Entladen von Stückgut**
Method and device for automatic loading and unloading of articles
Méthode et dispostif pour le chargement et déchargement automatiques d'articles

(30) Priorität: 13.04.2000 DE 10018385
(43) Veröffentlichungstag der Anmeldung: 17.10.2001
(73) Patentinhaber: Grenzebach Maschinenbau GmbH, 86663 Asbach-Bäumenheim/Hamlar (DE)
(72) Erfinder: Koini, Martin, 57636 Sörth (DE); Nagel, Günter, Dr., 76676 Graben-Neudorf (DE)
(74) Vertreter: Frese-Göddeke, Beate

(56) Entgegenhaltungen:
- WO-A-98/18697
- DE-A- 3 812 756
- DE-A- 10 035 810
- JP-U- 4 022 479
- JP-U- 6 035 234
- US-A- 4 579 501
- US-A- 4 650 067
- US-A- 5 628 539
- PATENT ABSTRACTS OF JAPAN vol. 018, no. 508 (M-1678), 26. September 1994 (1994-09-26) -& JP 06 171762 A (MURATA MACH LTD), 21. Juni 1994 (1994-06-21)

## Beschreibung

Die Erfindung betrifft ein Verfahren sowie eine Vorrichtung zum selbsttätigen Beuhd Entladen von Stückgut unterschiedlicher Form, Abmessung, Konsistenz und Masse innerhalb einer fest installierten Förderanlage.

Vorrichtungen zur Aufnahme von Fördergütern aus fest installierten Fördereinrichtungen sind als Roboter bekannt. Ebenso ist es an sich bekannt, die entsprechenden Fördergüter an eine Position im Wirkungsbereich des Roboters abzulegen beziehungsweise zu stapeln oder zu lagern.

Hierzu wird am sogenannten Roboterkopf, das ist das frei bewegliche Ende des zum betreffenden Roboter gehörigen Arms, eine entsprechende Aufnahmevorrichtung angebracht, zum Beispiel Greifer, die es erlaubt, die Fördergüter sicher und zuverlässig an ihrer Aufnahmeposition aufzunehmen und nach Beförderung an ihre Endposition wieder abzulegen. Aus der industriellen Anwendung sind verschiedenste Prinzipien und Ausführungsformen für diese Aufnahmevorrichtungen bekannt. Unter anderem sind folgende Aufnahmemechanismen bekannt:
- mechanische Greifvorrichtungen, die das Fördergut umfassen, werden zum Beispiel bei der Verladung sackartiger Fördergüter eingesetzt
- Unterdruckgreifer, die das Fördergut ansaugen, werden zum Beispiel bei der Verladung paketähnlicher Fördergüter eingesetzt
- elektromagnetische Greifer für die Verladung metallischer Fördergüter.

Das Dokument JP 06171762 offenbart eine Aufnahmevorrichtung für Roboter, die ein Förderband und einen Niederhalter enthält.

Die bekannten Last-Aufnahmeeinrichtungen für Roboter haben durchweg den Nachteil, daß ihr jeweiliges Aufnahmeprinzip nur für eine beschränkte Bandbreite an Fördergütern geeignet ist. Hierdurch sind diese Aufnahmeeinrichtungen in ihrer industriellen Anwendung auf bestimmte Fördergüter beschränkt. Insbesondere können sie nicht in Anwendungen eingesetzt werden, bei denen eine große Vielfalt an Fördergütern mit Hilfe derselben Aufnahmeeinrichtung aufgenommen und befördert werden muß.

Zudem weisen die meisten der bekannten Einrichtungen den Nachteil auf, daß das Fördergut durch die Aufnahmeeinrichtung umfaßt oder in anderer Form von der Seite oder von oben abgedeckt wird. Dies beeinträchtigt die Ablage des Fördergutes insoweit, als hierfür im Ablagebereich entsprechende Bewegungsfreiräume vorgehalten werden müssen, da anderenfalls die störungsfreie Entnahme beziehungsweise Ablage nicht gewährleistet ist. Falls solche Freiräume ortsabhängig oder anwendungsbedingt nicht möglich sind, können die entsprechenden Aufnahmemechanismen nicht eingesetzt werden.

Ein markantes Anwendungsbeispiel, bei dem die Nachteile der heute bekannten Aufnahmeeinrichtungen deutlich zu Tage treten, ist die roboterunterstützte Verladung von Gepäckstücken in Luftfracht-Container. Bei dieser Anwendung muß eine große physikalische Vielfalt an Gepäckstücken, das heißt Fördergut unterschiedlicher Abmessung, Konsistenz und Masse, sicher aufgenommen werden können.

Zudem müssen diese Gepäckstücke in einen nur seitlich zugänglichen Behälter befördert und dort abgelegt werden. Infolge des durch die Behälterwände und durch bereits vorhandene Gepäckstücke stark eingeschränkten Bewegungsraumes des Roboters mit seiner Aufnahmeeinrichtung können heute bekannte Aufnahmeeinrichtungen der zuvor beschriebenen Arten hier nicht eingesetzt werden.

Ausgehend von diesem Stand der Technik ist es Aufgabe der Erfindung, ein Verfahren sowie eine Vorrichtung der eingangs genannten Art derart weiterzubilden, daß nunmehr eine selbsttätige Be- und Entladung von Fördergut möglich ist, unabhängig von der Form, der Abmessungen der Konsistenz und der Masse. Zudem soll gewährleistet sein, die Fördergüter so an ihrem Zielort abzulegen, daß die Vorrichtung selbst möglichst wenig in den Ablagebereich hineinreicht.

Diese Aufgabe wird erfindungsgemäß durch die kennzeichnenden Merkmale des Anspruchs 1 gelöst. Weitere vorteilhafte Ausgestaltungen und Verbesserungen der Erfindung sind Gegenstand der Unteransprüche.
Gemäß der Erfindung wird das betreffende Stückgut von einer ferngesteuerten Vorrichtung selbsttätig aufgenommen, indem das Stückgut von der Vorrichtung reibschlüssig erfaßt und auf eine zur Vorrichtung gehörige Aufnahmeplattform bewegt wird. Dann wird das Stückgut nach seiner Aufnahme auf der Aufnahmeplattform bis zum Entladen gegen Abrutschen oder Herunterfallen kraft- und/oder formbestimmt gesichert und am Bestimmungsort von der Vorrichtung selbsttätig abgesetzt.

Gemäß der Erfindung erfolgt die Sicherung des auf der betreffenden Aufnahmeplattform befindlichen Ladeguts mittels zugeordneter seitlicher Begrenzungen, wobei in weiterer Ausgestaltung der Erfindung diese Begrenzungen auf das betreffende Ladegut eingestellt werden können.

Eine erfindungsgemäße Vorrichtung zur Durchführung des zuvor beschriebenen Verfahrens weist zunächst einen Roboter mit einem mehrachsig bewegbaren, aus wenigstens zwei Teilarmen gebildeten Tragarm auf. Am freien Ende des Tragarms ist ein erfindungsgemäßer Fördergutaufnehmer angeordnet, der eine Aufnahmeplattform besitzt, die ein Förderband aufweist und wenigstens an den beiden parallel zur Förderrichtung des Förderbands verlaufenden Seiten von je einer Seitenwand eingefaßt ist. Vereinfacht beschrieben ist die erfindungsgemäße Vorrichtung, die am Roboterarm angebracht ist, schaufelähnlich ausgebildet, wobei jedoch die bei einer Schaufel übliche Schubbewegung zur Aufnahme des betreffenden Förderguts hier unterbleibt. Statt dessen bewirkt die Bewegung des Förderbandes , daß das betreffende aufzunehmende Fördergut stetig auf die Aufnahmeplattform bewegt wird, indem das griffige Förderband reibschlüssig das Fördergut erfaßt und solange auf die Aufnahmeplattform zieht, bis ein dort vorgesehener Endschalter beziehungsweise Endanschlag die Förderbewegung des Förderbandes unterbricht.

Die Erfindung beschreibt also eine an einem Roboterarm befestigte Einrichtung zur Aufnahme von Fördergut. Mit Hilfe dieser Einrichtung, die ein translatorischer Fördergutaufnehmer ist, können Fördergüter von fest installierten Fördereinrichtungen, wie zum Beispiel Gurtförderern, aufgenommen und mit dem Roboter an eine in dessen Wirkbereich befindliche Position befördert und dort abgelegt werden.

Ein bevorzugtes Einsatzgebiet der vorliegenden Erfindung ist die Verladung und Entladung von Luftfrachtgut. Die erfindungsgemäße Vorrichtung dient hierbei für die Aufnahme von Passagiergepäck bei der roboterunterstützten Verladung des Gepäcks in Luftfracht-Container. Die nachfolgend beschriebene Anordnung ist aber nicht auf diesen Anwendungsfall beschränkt, sondern kann, gegebenenfalls mit kleineren Anpassungen, auch für andere Verladeprozesse angewandt werden.

Gemäß der Erfindung ist das Förderband als bidirektional angetriebenes Förderband ausgebildet, wobei vorzugsweise ein in eine Umlenkrolle für das Förderband integrierter elektrischer Wellenmotor als Antrieb dient.

Hierbei erweist es sich als günstig, daß die an der Aufnahmeplattform vorgesehenen Umlenkrollen für das Förderband einen Durchmesser zwischen 8 % und 15 % der Breite des Förderbandes, vorzugsweise 10 %, aufweisen.

Vorteilhafterweise ist das Förderband von einem Fördergurt gebildet, dessen Oberfläche eine Profilierung aufweist, die vorzugsweise quer zur Förderrichtung des Förderbands verläuft. Statt dessen kann die Oberfläche zwecks Verbesserung der Griffigkeit auch mit Noppen versehen sein, um hierdurch das Erfassen des betreffenden Förderguts zuverlässiger zu bewirken.

Eine weitere vorteilhafte Weiterbildung der Erfindung sieht vor, daß das Förderband in jeder Richtung einen Endschalter beziehungsweise Endanschlag aufweist, welcher den Vor- beziehungsweise Rücklauf des Förderbandes stoppt, sobald das betreffende Fördergut seine Endposition auf der Aufnahmeplattform erreicht beziehungsweise verlassen hat.

Zweckmäßigerweise hat das Förderband eine Dicke von wenigstens 1 mm zuzüglich der Profilhöhe, so daß das Förderband auch für bei kleine Umlenkradien geeignet ist.

Im Hinblick auf eine gleichzeitig gute Handhabbarkeit und große Anwendungsbreite des Fördergutaufnehmers beträgt die Länge des Förderbandes wenigstens das 1,3-fache seiner Breite, vorzugsweise 450 mm.

Um das auf der Aufnahmeplattform befindliche Fördergut ausreichend zu sichern sind die seitlichen, die Aufnahmeplattform einfassenden Seitenwände beweglich angeordnet und demgemäß an die Abmessung des betreffenden Förderguts anpaßbar.

Der erfindungsgemäße Fördergutaufnehmer kann zusätzlich mit wenigstens einem Näherungssensor versehen sein, der zweckmäßigerweise an der Aufnahmeplattform angeordnet ist und mit einer Steuerungseinrichtung zusammenarbeitet, welche darüber hinaus auch die Steuerung des Basisgerätes, das heißt des Roboters, übernimmt. In Ergänzung hierzu kann ferner auch eine Videoüberwachung vorgesehen sein, welche den Arbeitsablauf der Vorrichtung überwacht und mit der Steuerungseinrichtung zusammenarbeitet

Gemäß einer weiteren vorteilhaften Ausgestaltung der Erfindung ist der erfindungsgemäße Fördergutaufnehmer in einer selbsttätig arbeitenden Förderanlage für Stückgut angeordnet und nimmt die Be- und Entladung von Fördergut unterschiedlicher Form, Konsistenz und Masse in beziehungsweise aus Gepäckwagen selbsttätig vor, welche hierzu an der Förderanlage bereitgestellt sind.

Diese und weitere vorteilhafte Ausgestaltungen und Verbesserungen der Erfindung finden sich in der nachfolgenden Beschreibung eines Ausführungsbeispieles.

Anhand eines in der beigefügten Zeichnung dargestellten Ausführungsbeispieles sollen die Erfindung, vorteilhafte Ausgestaltungen und Verbesserungen sowie weitere Vorteile der Erfindung näher erläutert und beschrieben werden.

Es zeigen:
- Fig. 1: einen Längsschnitt durch eine erfindungsgemäße Vorrichtung und
- Fig. 2: eine Schrägansicht einer Vorrichtung gemäß Fig. 1.

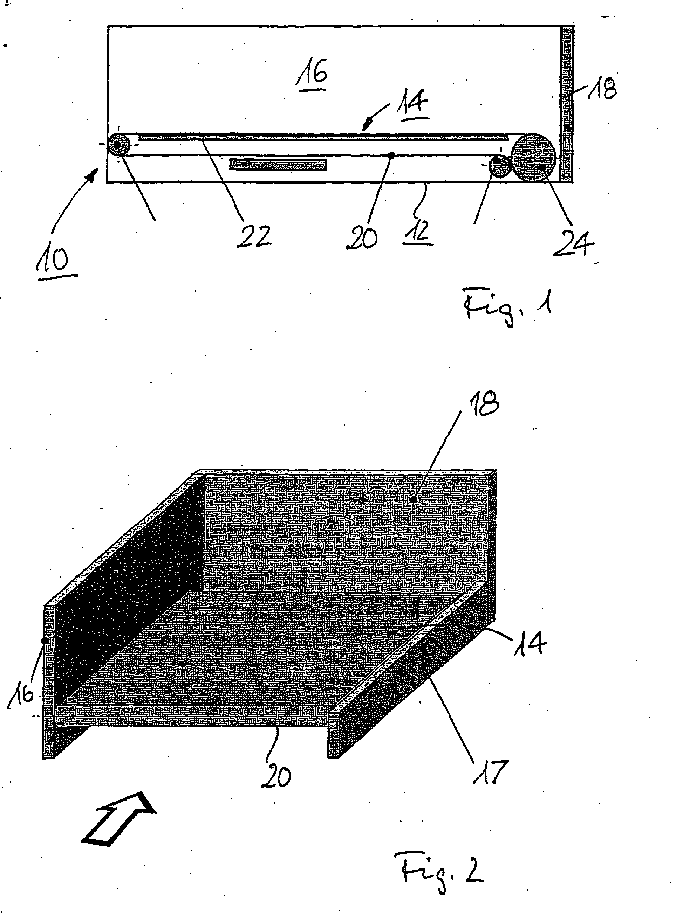

Der erfindungsgemäße translatorische Fördergutaufnehmer 10 besitzt ein nach oben offenes Gehäuse 12 mit einem Boden 14. Das Gehäuse 12 ist seitlich und rückwärtig jeweils von einer Wand 16, 17, 18 begrenzt, von denen in Fig. 1 nur eine Seitenwand 16 in Draufsicht und die Rückwand 18 im Querschnitt gezeigt sind.

Der Boden 14 wird gebildet von einem Fördergurt 20, der sich auf einer Plattform 22 abstützt und der durch einen Trommelmotor 24 bidirektional beaufschlagt wird. Der Fördergurt 20 ist als Endlosband ausgebildet und wird über Umlenkrollen 26 und 28 geführt. Die Plattform 22 dient zur Ablagerung des auf den Fördergurt 20 aufgenommenen Fördergutes und ist von einer unter der Oberseite des Förderbandes 20 angeordneten Ablageplatte 4 gebildet.

Die erwähnten Seitenwände 16, 17 sowie die Rückwand 18 dienen zur Sicherung des aufgenommenen Fördergutes und sind als an den Seiten des Fördergurtes 20 befindliche Führungen 16, 17 beziehungsweise als Anschlag 18 vorgesehen. Diese können in unterschiedlichen Ausführungsformen auch klapp- oder versenkbar oder verschieblich gestaltet sein, um so die Fördergut-Aufnahme beziehungsweise -Abgabe in der Anwendung vorteilhafter zu gestalten.

Die Rückwand 18 des Aufnehmers 10 dient sowohl der Sicherung eines Gepäckstückes gegenüber Verrutschen beziehungsweise Herabfallen als auch der Befestigung der erfindungsgemäßen Vorrichtung an einem hier nicht näher gezeigten Roboterarm. Über die Rückwand 18 werden ebenfalls die benötigten Signal- und Versorgungsleitungen für den Antrieb und die Steuerung des Trommelmotors 24 zugeführt.

In der Anwendung ergibt sich mit dem beschriebenen translatorischen Fördergutaufnehmer 10 der folgende Funktionsablauf:
Der translatorische Fördergutaufnehmer 10 wird vom Roboterarm so in den Förderweg von in bekannter Weise vorhandenen Förderstrecken für das Gepäck beziehungsweise Frachtgut positioniert, daß er in den Kaskadensprung zweier hier nicht gezeigter, aufeinander folgender Gurtförderer beziehungsweise am Ende einer Förderstrecke gelangt. Mittels einer übergeordneten Steuerung wird der Gurtförderer gestartet, während gleichzeitig die Steuerung der Fördertechnik den Befehl gibt, das Fördergut weiterzubewegen.

Durch die synchronisierte Förderbewegung gelangt das Fördergut auf den Fördergurt des translatorischen Fördergutaufnehmers 10. Nach Erreichen der Endposition dort wird die Förderbewegung durch eine integrierte Endlagenabschaltung gestoppt.

Das derart aufgenommene Fördergut wird nunmehr vom Roboterarm an seine Zielstelle positioniert. Durch Synchronisation der Abförderbewegung des Fördergurts 20 des translatorischen Fördergutaufnehmers 10 einerseits mit dem sich bewegenden Roboterarm andererseits wird ein relatives statisches Verweilen des Förderguts an seiner Zielstelle erreicht.

Mit dem so beschriebenen Verfahren ist es daher möglich, alle mit Gurtförderern transportierbaren Fördergüter unabhängig von deren Oberfläche, Konsistenz, Gewicht und Form aufzunehmen. Durch die Synchronisation der Fördergeschwindigkeit der fest installierten Gurtförderer mit dem Förderband 20 des translatorischen Fördergutaufnehmers 10 ist gewährleistet, daß bei dem Transfer von der Förderstrecke auf den Aufnehmer keine Förderprobleme auftreten, die zum Beispiel durch Aufstauen von Fördergütern oder Verkanten beziehungsweise Verschieben eines Fördergutes entstehen.
Mit Hilfe der seitlichen und rückseitigen Führungen und Anschläge 16, 17, 18 ist bei der Positionierung durch den Roboter ferner gewährleistet, daß das Fördergut au dem Aufnehmer verbleibt. Hierdurch wird eine extrem vielachsige Roboterbewegung, einschließlich des Kippens der Aufnahmevorrichtung zum Schutz vor Rutschen des Förderstücks in Längsrichtung des Förderbandes, ermöglicht.

Die Synchronisation der Bewegung des Förderbandes 20 mit der Bewegung des Roboterarms bei der Ablage des Fördergutes erlaubt, speziell in Anwendungen wie der beschriebenen Gepäckverladung eine exakte Positionierung des Fördergutes an seiner Zielstelle, die auch beim Abladeprozess selbst erhalten bleibt. Zudem wird bei der Ablage nur ein geringer zusätzlicher Freiraum an der Zielstelle benötigt, da der Roboter und die Aufnahmevorrichtung im wesentlichen nur seitlich und außerhalb des Ablagebereiches positioniert sind und nur das Förderband 20 mit seinen Seitenaufbauten 16 und 17 in den Zielbereich ragen.

## Patentansprüche

1. Verfahren zum selbsttätigen Be- und Entladen von Stückgut unterschiedlicher Form, Konsistenz und Masse innerhalb einer fest installierten Förderanlage, wobei das betreffende Stückgut von einer ferngesteuerten Vorrichtung selbsttätig aufgenommen wird, indem das Stückgut von der Vorrichtung reibschlüssig erfaßt und auf eine zur Vorrichtung gehörige Aufnahmeplattform bewegt wird, wobei das Stückgut nach seiner Aufnahme auf der Aufnahmeplattform bis zum Entladen gegen Abrutschen oder Herunterfallen kraft- und/oder formbestimmt gesichert wird und das Ladegut von der Vorrichtung selbsttätig am Bestimmungsort abgesetzt wird **dadurch genkennzeichnet, dass** das betreffende Ladegut auf der Aufnahmeplattform mittels zugeordneter seitlicher Begrenzungen gesichert wird.

2. Verfahren nach Anspruch 1, **dadurch gekennzeichnet, daß** das betreffende Ladegut auf der Aufnahmeplattform (14, 20, 22) mittels einstellbarer seitlicher Begrenzungen (16; 17,18) gesichert wird.

3. Vorrichtung zur Durchführung des Verfahrens nach einem der vorherigen Ansprüche mit einem einen mehrachsig bewegbaren, aus wenigstens zwei Teilarmen gebildeten Tragarm aufweisenden Roboter wobei, am freien Ende des Tragarms ein Fördergutaufnehmer angeordnet ist, wobei; der Fördergutaufnehmer eine Aufnahmeplattform besitzt, die ein Förderband aufweist, wobei das Förderband als bidirektional angetriebenes Endlosband ausgebildet ist, **dadurch gekennzeichnet, daß** die Aufnahmeplattform wenigstens an den beiden parallel zur Förderrichtung des Förderbands verlaufenden Seiten von je einer Seitenwand eingefaßt ist

4. Vorrichtung nach Anspruch 3 , **dadurch gekennzeichnet, daß** das Förderband (20) von einem Fördergurt gebildet ist, dessen Oberfläche eine quer zur Förderrichtung des Förderbands verlaufende Profilierung aufweist.

5. Vorrichtung nach einem der Ansprüche 3 oder 4, **dadurch gekennzeichnet, daß** die Aufnahmeplattform Umlenkrollen (24) für das Förderband aufweist, deren Durchmesser zwischen 8 % und 15 % der Breite des Förderbandes beträgt, vorzugsweise 10 %.

6. Vorrichtung nach einem der Ansprüche 3 bis 5, **dadurch gekennzeichnet, daß** das Förderband (20) in jeder Richtung einen Endschalter beziehungsweise Endanschlag aufweist.

7. Vorrichtung nach einem der Ansprüche 3 bis 6, **dadurch gekennzeichnet, daß** das Förderband (20) eine Dicke von wenigstens 1 mm aufweist zuzüglich der Profilhöhe.

8. Vorrichtung nach einem der Ansprüche 3 bis 7, **dadurch gekennzeichnet, daß** die Länge des Förderbandes wenigstens das 1,3-fache seiner Breite beträgt, vorzugsweise 450 mm

9. Vorrichtung nach einem der vorherigen Ansprüche 3 bis 8, **dadurch gekennzeichnet, daß** die seitlichen, die Aufnahmeplattform einfassenden Seitenwände (16, 17) beweglich angeordnet sind.

10. Vorrichtung nach einem der Ansprüche 3 bis 9, **dadurch gekennzeichnet, daß** der Abstand der seitlichen, die Aufnahmeplattform (14, 20, 22) einfassenden Seitenwände (16, 17) an die Abmessung des betreffenden Förderguts anpaßbar ist.

11. Vorrichtung nach einem der Ansprüche 3 bis 10, **dadurch gekennzeichnet, daß** der Aufnahmeplattform (14, 20, 22) Näherungssensoren zugeordnet sind, welche mit einer Steuerungseinrichtung zusammenarbeiten.

12. Vorrichtung nach einem der Ansprüche 3 bis 11, **dadurch gekennzeichnet, daß** eine Videoüberwachung vorgesehen ist, welche den Arbeitsablauf der Vorrichtung (10) überwacht und mit der Steuerungseinrichtung zusammenarbeitet

13. Vorrichtung nach einem der Ansprüche 3 bis 12, die in einer selbsttätig arbeitenden Förderanlage für Stückgut angeordnet ist und die selbsttätige Be- und Entladung von Fördergut unterschiedlicher Form, Konsistenz und Masse in beziehungsweise aus Gepäckwagen vornimmt, welche hierzu an der Förderanlage bereitgestellt sind.

## Claims

1. Method for automatically loading and unloading piece goods of differing shapes, consistencies and masses inside a permanently installed conveying system, wherein the piece in question is picked up automatically by a remote-controlled device, in that the piece is gripped frictionally by the device and is moved onto a pick-up platform belonging to the device, wherein the piece after being placed on the pick-up platform is secured from sliding or falling down by force and/or form until unloaded, and the cargo is placed down in the intended place automatically by the device, **characterised in that** the cargo in question is secured on the pick-up platform by means of allocated lateral delimitations.

2. Method according to claim 1, **characterised in that** the relevant piece of cargo is secured onto the pick-up platform (14, 20, 22) by means of adjustable, lateral delimitations (16; 17, 18).

3. Device for performing the method according to one of the preceding claims with a robot comprising a multiple-axis movable support arm formed by at least two part arms, wherein at the free end of the support arm a conveyed goods pick-up device is arranged, wherein the conveyed goods pick-up device has a pick-up platform, which comprises a conveyor belt, wherein the conveyor belt is designed to be a bidirectionally driven endless conveyor belt, **characterised in that** the pick-up platform is surrounded at least on the two sides running parallel to the conveying direction of the conveyor belt by a side wall.

4. Device according to claim 3, **characterised in that** the conveyor belt (20) is formed by a conveyor belt, the surface of which has a profiling running at right angles to the conveying direction of the conveyor belt.

5. Device according to one of claims 3 or 4, **characterised in that** the pick-up platform comprises deflection rollers (24) for the conveyor belt, the diameter of which rollers is between 8 % and 15 % of the width of the conveyor belt, preferably 10 %.

6. Device according to one of claims 3 to 5, **characterised in that** the conveyor belt (20) has a limit switch or end stop in each direction.

7. Device according to one of claims 3 to 6, **characterised in that** the conveyor belt (20) has a thickness of at least 1 mm in addition to the profile height.

8. Device according to one of claims 3 to 7, **characterised in that** the length of the conveyor belt is at least 1.3 times its width, preferably 450 mm.

9. Device according to one of the preceding claims 3 to 8, **characterised in that** the lateral side walls (16, 17) surrounding the pick-up platform are arranged to be movable.

10. Device according to one of claims 3 to 9, **characterised in that** the distance between the lateral side walls (16, 17) surrounding the pick-up platform (14, 20, 22) can be adjusted to the dimension of the relevant conveyed item.

11. Device according to one of claims 3 to 10, **characterised in that** the pick-up platform (14, 20, 22) is assigned proximity sensors which operate together with a control device.

12. Device according to one of claims 3 to 11, **characterised in that** a video monitor is provided, which monitors the operating sequence of the device (10) and operates together with the control device

13. Device according to one of claims 3 to 12, which is arranged in an automatically operating conveying system for piece goods and which performs the automatic loading and unloading of conveyed goods of differing shapes, consistencies and masses in or out of baggage cars, which are provided for this purpose next to the conveying system.

## Revendications

1. Méthode pour le chargement et le déchargement automatiques d'articles de forme, consistance et masse différentes au sein d'une installation de transport fixe, dans laquelle l'article concerné est reçu automatiquement par un dispositif télécommandé par le fait que l'article est saisi par friction par le dispositif et déplacé sur une plate-forme de réception faisant partie du dispositif, dans laquelle l'article est protégé après sa réception sur la plate-forme de réception jusqu'au déchargement de manière définie du point de vue force et/ou forme contre le glissement ou la chute et le produit chargé est déposé automatiquement du dispositif au lieu de destination, **caractérisée en ce que** le produit chargé concerné est assuré sur la plate-forme de réception au moyen de limiteurs latéraux affectés.

2. Méthode selon la revendication 1, **caractérisée en ce que** le produit chargé concerné est assuré sur la plate-forme de réception (14, 20, 22) au moyen de limiteurs latéraux réglables (16, 17, 18).

3. Dispositif permettant de réaliser la méthode selon l'une quelconque des revendications précédentes avec un robot présentant un bras porteur mobile sur plusieurs axes et formé d'au moins deux bras partiels, dans lequel un dispositif de réception de la marchandise transportée est agencé à l'extrémité libre du bras porteur, dans lequel le dispositif de réception de la marchandise transportée possède une plate-forme de réception qui présente une bande transporteuse, la bande transporteuse étant réalisée sous forme de bande sans fin à entraînement bidirectionnel, **caractérisé en ce que** la plate-forme de réception est bordée au moins au niveau des deux côtés s'étendant parallèlement au sens de transport de la bande transporteuse par respectivement une paroi latérale.

4. Dispositif selon la revendication 3, **caractérisé en ce que** la bande transporteuse (20) est formée d'une courroie de transport dont la surface présente un profilage s'étendant transversalement au sens de transport de la bande transporteuse.

5. Dispositif selon l'une quelconque des revendications 3 ou 4, **caractérisé en ce que** la plate-forme de réception présente des poulies de renvoi (24) pour la bande transporteuse, dont le diamètre est compris entre 8% et 15% de la largeur de la bande transporteuse, de préférence 10%.

6. Dispositif selon l'une quelconque des revendications 3 à 5, **caractérisé en ce que** la bande transporteuse (20) présente dans chaque direction un interrupteur de fin de course respectivement une butée de fin de course.

7. Dispositif selon l'une quelconque des revendications 3 à 6, **caractérisé en ce que** la bande transporteuse (20) a une épaisseur d'au moins 1 mm en plus de la hauteur de profil.

8. Dispositif selon l'une quelconque des revendications 3 à 7, **caractérisé en ce que** la longueur de la bande transporteuse est au moins égale à 1,3 fois sa largeur, de préférence 450 mm.

9. Dispositif selon l'une quelconque des revendications précédentes 3 à 8, **caractérisé en ce que** les parois latérales (16, 17) latérales bordant la plate-forme de réception sont agencées de manière mobile.

10. Dispositif selon l'une quelconque des revendications 3 à 9, **caractérisé en ce que** la distance des parois latérales (16, 17) latérales bordant la plate-forme de réception (14, 20, 22) peut être adaptée à la dimension de la marchandise transportée concernée.

11. Dispositif selon l'une quelconque des revendications 3 à 10, **caractérisé en ce que** des capteurs de proximité qui coopèrent avec un équipement de commande sont affectés à la plate-forme de réception (1A, 20, 22).

12. Dispositif selon l'une quelconque des revendications 3 à 11, **caractérisé en ce qu'**il est prévu une vidéosurveillance qui surveille le déroulement des opérations du dispositif (10) et coopère avec l'équipement de commande.

13. Dispositif selon l'une quelconque des revendications 3 à 12, qui est agencé dans une installation de transport d'articles à fonctionnement automatique et procède au chargement et déchargement automatiques de la marchandise transportée de forme, consistance et masse différentes dans respectivement des chariots à bagages, qui sont mis à disposition pour ce faire au niveau de l'installation de transport.
